# EUROPEAN PATENT APPLICATION

(11) **EP 2 288 091 A1**
(43) Date of publication of application: **23.02.2011**
(21) Application number: 09368027.0
(22) Date of filing: 13.08.2009
(51) Int. Cl.: H04L 12/56, H04W 72/00, H04W 76/00

(54) **Process for controlling the attachment of one mobile terminal to one particular attachment point belonging to one particular wireless access network technology**

(71) Applicant: Institut Eurecom G.I.E., 06904 Sophia-Antipolis (FR)
(72) Inventor: Fethi, Filali, 06600 Antibes (FR); Bonnet, Christian, 06560 Valbonne (FR)
(74) Representative: Schuffenecker, Thierry

(57) **Abstract**

Process for the control of the Attachment of one mobile terminal to one particular Attachment Point belonging to one particular wireless technology.
The process takes place in a general architecture which allows management of a number of different radio technologies and which can easily integrate future radio technologies. The process controls the association of one terminal having at least two radio interlaces which can each be associated to one particular Attachment Point belonging to one particular radio technology, such as WIFI, Wimax, UMTS etc...
Each particular Attachment Point is associated to one particular Resource Controller which provides measurements related to the particular wireless communication for said AP. The measurements may include the bandwidth available and are reported to a Radio Resource Manager (RRM) which is specific to the given radio technology e.g. WIFI, WIMAX, UMTS. The information collected by the RRM belonging to the different radio technologies are reported to a Unified Radio Resource manager which can provide control information to a mobile terminal requesting connectivity to a wireless network with a given Quality of Service. The process executed between the mobile terminal and the above mentioned network architecture involves all the relevant network discovering steps and afterwards the attach procedure steps.

## Description

### Technical field

The invention relates to the field of wireless communication and more particularly to a process for controlling the attachment of one mobile terminal to one particular attachment point belonging to one particular wireless access network technologiy, such as a wireless LAN technology

### Background Art

Wireless LAN are rapidly spreading in the world with the development of the latest technologies including 802.11 (WIFI), WIMAX, UMTS technologies, the latter including the latest upgrade HSDPA.

A mobile terminal or any computer may get instant connectivity to the Internet network by means of a significant number of wireless LAN technology and such diversity in the ways of attachment shows to be a great advantage for the consumer as well as a technical problem for providing appropriate connectivity.

Non published European patent application 08368005.8 filed on 25 February 2008 and entitled "*Process for controlling the association of one mobile terminal to one particular access point belonging to one wireless network"* assigned to the Assignee of the present application discloses one technique available for the WIFI wireless LAN, which allows a mobile terminal to control the association to one particular Access Point (AP) in accordance with information provided by a centralized Radio Ressources Management (RRM) device monitoring the bandwidth available to each access points visible to the mobile terminal.

Clearly, the non published prior art discloses an effective technique which achieves the management of numerous access points visible to one mobile terminal in one WIFI wireless network.

With the multiplication of the existing (and future) radio technologies, including WIFI, Wimax, UMTS, etc..., there is still a further need of providing the management of such a high number of technologies, and more over the particular Points of Attachments which are visible to one mobile terminal and which may be used for providing the wireless connectivity.

In addition, it is highly desirable to provide a general architecture which achieves, to a wide extent, some independence to the particular technologies being involved.

Such is the technical problem to be solved by the present invention.

### Summary of the invention

It is an object of the present invention to provide a process allowing the control of the attachment of one mobile terminal to one particular attachment point, visible to that terminal, and belonging to one particular wireless LAN technology

It is another object of the present invention to provide a general architecture which allows management of a number of different radio technologies and which can easily integrate future radio technologies.

These and other objects of the invention are achieved by means of a process for controlling the association of one terminal having at least two radio interfaces which can each be associated to one particular Attachment Point belonging to one particular radio technology, such as WIFI, Wimax, UMTS etc...

Each particular Attachment Point is associated to one particular Resource Controller which provides measurements relating to the particular wireless communication for said AP. The measurements may include the bandwidth available etc..., and are reported to a Radio Resource Manager (RRM) which is specific to the given radio technology, WIFI, WIMAX, UMTS etc...

The information collected by the RRM belonging to the different radio technologies are reported to a Unified Radio Resource manager which can provide control information to a mobile terminal requesting connectivity to a wireless network with a given Quality of Service.

The process executed in such mobile terminal involves the steps of:
- capturing the wireless parameters of visible Attachment Points (AP);
- associating to one default AP in order to establish a first preliminary wireless connectivity;
- transmitting a Discovery request (URRM DISCOVERY REQUEST) to the URRM device for requesting benefit of a wireless connectivity with a given Quality of Service;
- detecting a URRM discovery reply (URRM DISCOVERY REPLY) from said URRM device confirming access to said service;
- in response to a query presented by a running application within said new terminal, generating and transmitting to the URRM a connectivity request message requesting a connectivity with a given QoS (such as a bandwidth for instance);
- waiting for a connectivity reply message (CONNECTIVITY REPLY) comprising information reported by the Resource controller to the URRM via the different RRMx;
- controlling association to one particular AP based on said information forwarded by said CONNECTIVITY reply message received from the URRM.

In one embodiment, the Radio Resource Manager device and the Mobile Terminal communicate with the URRM after having received an IP address via a Domain Name Server.

The invention also provides a Resource Controller device to be associated to one Attachment Point of a wireless network comprising at least two different radio technologies; said device being able to communicate with a centralized Radio Resources Management (RRMx) devices for the purpose of collecting the results of the computation.

The Resource control further comprises:
- means for receiving from the centralized Radio Resources Management (RRM) device a message requesting a predetermined Quality of Service comprising data representative of the communication of a new terminal requesting access to the wireless network,
- means for generating an estimated value of the QoS metrics for the attached Attachment Point to said centralized Radio Resources Management (RRMx) device for the purpose of collecting the results of said computation;

The invention also provides with a Mobile terminal for a wireless network comprising at least two different Attachment Points (AP) belonging to two different radio technologies; the terminal comprising:
- means for capturing the parameters of the visible Attachment Points;
- means for associating the new mobile terminal to one default Attachment Point belonging to one default radio technology;
- means for generating and transmitting a URRM discovery request to a centralized Unified Radio Resources Management (RRM) device communicating with RRM devices which are specific to different radio technologies for requesting benefit of a service from said URRM device;
- means for detecting a URRM discovery reply (URRM DISCOVERY REPLY) from URRM device confirming access to said service;
- in response to a query presented by a running application within said new terminal, means for generating and transmitting to said Unified Radio Resources

Management (RRM) device a CONNECTIVITY request message (CONNECTIVITY REQUEST) requesting connectivity with a given level of Quality of Service;
- means for waiting for a CONNECTIVITY reply (CONNECTIVITY REPLY) comprising information collected by said Radio Resource Management devices from the associated Resource Controllers attached to the corresponding Attachments points visible to said mobile computer, said reply being prepared and forwarded by said Unified Radio Resources Management device;
- means for controlling association to one particular attachment point based on said information forwarded by said CONNECTIVITY reply message received from said URRM device (100).

### Description of the drawings

Other features of one or more embodiments of the invention will best be understood by reference to the following detailed description when read in conjunction with the accompanying drawings.
Figure 1 illustrates a typical wireless LAN architecture in accordance with one embodiment providing three different radio technologies accesses to a mobile terminal.
Figure 2A illustrates the messages exchanged by one Wireless Access Network WAN RRM - such as WAN RRM 10 for instance - and the different resource controllers associated to the different Attachment Points.
Figure 2B shows the messages exchanged between the URRM 100 and the different WAN RRMx in one particular embodiment using a domain name server.
Figure 3 illustrates the diagram of the messages which are exchanged between the MTC , the Unified Ressources Management (URM) and the different Radio Ressources Management (RRMx).
Figure 4 is a flow chart illustrating the AP Association control process.
Figures 5A and 5B are flow charts respectively illustrating the URRM and RRMx process.

### Description of the preferred embodiment

The following description is presented to enable a person skilled in the art to make and use the invention. Descriptions of specific embodiments are provided only as examples. Various modifications to the described embodiments may be apparent to those skilled in the art, and the generic principles defined herein may be applied to other embodiments and applications without departing from the spirit and scope of the invention. Thus, the present invention is not intended to be limited to the expressly described or illustrated embodiments, but is to be accorded the widest scope consistent with the principles and features disclosed herein.

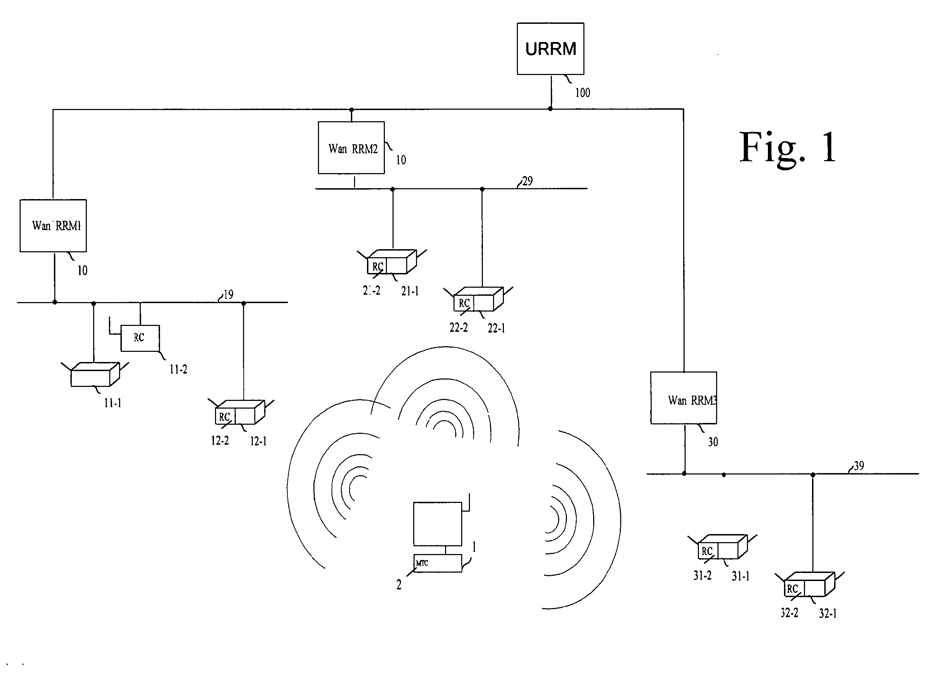

With respect to Figure 1 there is now described in detail the general architecture showing one mobile terminal of the wireless connection including different radio technologies, such as WIFI, WIMAX and UMTS. Clearly, the skilled man will adapt the description provided below to any other existing or future radio technology, including the Long Term Evolution (LTE) wireless communication.

In the figure a **Mobile Terminal 1** is represented which may be any laptop computer, any handheld or Personal Assistant, or Personal Document Assistant (PDA), or more generally any Information Handling System (IHS) (including desktop computer) which may request connectivity to the network with a particular Quality of Service (QoS).

In one particular embodiment, Mobile Terminal 1 is a conventional laptop computer which incorporates different radio technologies access facilities, such as a WIFI card or interface complying with the well known 802.11 standard, a Wimax radio interface and a more recent UMTS or 3G communication interface.

The co-existence of different radio interface allows Mobile Terminal 1 to receive connectivity to one among the above mentioned radio technologies, and such access closely depends on the presence of corresponding Attachment Points (AP) visible to the Mobile Terminal 1.

Mobile terminal 1 further includes one software program or agent - designated as a Mobile Terminal Controller (MTC) block 2 , which is designed to get the control of the various radio technology interfaces, and for executing the different steps and procedures described hereinafter.

With respect to figure 1 again, there is shown that a first Wireless LAN network 19, complying with a first radio technology which is visible to Mobile Terminal 1, through a first Attachment Point 11-1 and an second Attachment Point 12-1. It should be noticed that the use of only two attachment points is only given as an example and the WAN network 19 may including a greater number of AP.

The two Attachment Points 11-1 and 12-1 are respectively associated to two **Resource Controllers**, respectively 11-2 and 12-2, providing various measurements relative to the associated Attachments Points.

Figure 1 particularly shows that Resource Controller 11-2 is embodied under the form of a specific device which is associated to Attachment Point 11-1 which, therefore, can be any conventional Attachment Point dedicated to a first specific radio technology, while Resource controller 12-2 is integrated with the Attachment Point 12-1 to which it is associated to.

Also attached to the LAN 19, a Wireless LAN Radio Resources Management device 10 provides centralization of all the data collected by the different Resource Controllers (11-2, 12-2..) associated to the AP present on LAN 19. In one particular embodiment, scalability may result in the distribution of the WAN RRM entity 10 into different individual RRM devices which can, for instance, be located in different buildings belonging to a same Wireless LAN topography. However, for the sake of clarity, figure 1 illustrates only one single WAN RRM 10 associated to the two Attachment Points 11-1 and 12-1 but, clearly, a skilled man will adapt the teaching of the invention to the existence of numerous WAN RRM devices embodying one single RRM function dedicated to one radio technology.

Resource controllers 11-2 and 12-2 provides numerous measurements (and monitoring) relative to the particular radio technology being considered. Generally speaking, such measurements may include the measurement of the instantaneous quality of the radio link, the global load of the radio cell which is controlled by the Attachment Point, the instantaneous bandwidth available, the estimation of the traffic etc... Because the Resource controller is specific to one dedicated radio technology, its practical realization closely depends on the requirements and the parameters of that technology. For instance, in UMTS, the measurements which can be considered may even depend on the particular release ( rel.4, rel5) which is considered.

In the particular embodiment which is depicted in figure 1, the first radio technology is assumed to be complying with the well known 802.11 standard (WIFI), so that Attachment Points 11-1 and 12-1 are conventional Access Points providing wireless connectivity to the Mobile Terminal 1.

In the particular example, the Resource Controllers 11-2 and 12-2 is embodied under the form of a so called WIMETER particularly providing estimation of the available bandwidth for the dedicated access point, and particularly described in non published European patent application 08368005.8 filed on 25 February 2008 which is herein incorporated by simple reference.

WIMETER 12-2 is incorporated with Access Point 12-1 so as to provide a one single device offering wireless network connectivity as well as resources control and measurements. Alternatively, any commercial existing access point, such as access point 11-1 , can be attached to the LAN network 19 and, in this case, such access point 11-1 is associated with a dedicated Wimeter box 11-2 as represented in the figure.

Basically speaking, the Wimeter 11-2 and 12-2 perform a continuous estimation of the available bandwidth of the considered access point and provides such estimation, upon request from a so -called Radio Resources Management Wireless Access Network (RRM WAN) device 10 for determining a new criteria for assigning an access point to one particular Mobile Terminal 1, as shown in figure 1.

In one particular embodiment WAN RRM 10 is embodied by means of a general purpose computer offering network attachment and having a software program running and executing the code and instructions for the purpose of embodying the process of the invention, and processing the particular messages which are described below. In that case, WAN RRM device 10 may also be used for running other applications programs which might be useful for the LAN administrator. Alternatively, WAN RRM device 10 may be any specific hardware equipment which is dedicated to the sole role of generating, receiving and processing the different messages which are hereinafter described with details.

With respect to figure 1 again, there is shown that there is shown that mobile terminal 1 may get wireless connectivity via a second Wireless LAN network 29, complying with a second radio technology - such as WIMAX for instance - through a first Attachment Point 21-1 (designated as *Base Station* in the Wimax terminology) and also through a second Attachment Point or Base Station 22-1. Each Base station 21-1 or 22-1 is associated to one corresponding Resource Controller , respectively 21-2 and 22-2, which provides particularly measurements fitting the radio technology considered, including bandwidth and delay measurements etc... For the sake of clarity, the Resource Controller 21-2 and 22-2 are presented as being embodied within the same device of the Attachments Points. Clearly, the skilled man will adapt the invention if the Resource Control has to be realized in a specific box being separate from the Attachments Points which it is dedicated to. The Ressource controllers 21-2 and 22-2 communication with a WAN Radio Resource Management device 20 centralizing the gathering of all useful information regarding the traffic and network parameters of the second Wireless network.

In addition, Figure 1 shows that a third Wireless LAN network 39, complying with a third radio technology - such as Universal Mobile Telecommunications Systems (UMTS) - is also visible to Mobile Terminal 1, through a first Attachment Point 31-1 (designated as *eNodeB* or *Base Station* in the UMTS terminology) and an second Attachment Point 32-1, each associated with a corresponding Resource Controller, respectively 31-2 and 32-2, providing measurements and monitoring of network parameters representative of the traffic of the particular Attachment Point, including bandwidth and delay measurements etc... Similarly as above, the Resource controller are assumed to be integrated into the particular Attachment Points they are associated to. The Resource controller 31-2 and 32-2 communication with a WAN Radio Resource Management device 30 centralizing the gathering of all useful information regarding the traffic and network parameters of the second Wireless network.

Figure 1 further shows that the different WAN RRM 10, 20 and 30 communicate with a Unified Radio Resource Management (URRM) device 100 by means of an appropriate backbone or appropriate communication means. While all the WAN RRM 10, 20 and 30 are all specific and dedicated to one radio technology - respectively WIFI, WIMAX and UMTS - the Unified Radio Resource Management (URRM) device 100 is completely independent on the particular radio technologies and only comprises the hardware and software component for embodying the processes and exchanges of messages which are discussed below.

As a consequence, the architecture shows to be very flexible since the introduction of any new radio technology (e.g. such as the future LTE technology) will only require the design of a new WAN RRM specific to that particularly technology. On the other hand, the URRM device 100 remains unchanged and centralizes the information reported by the different specific WAN RRMs.

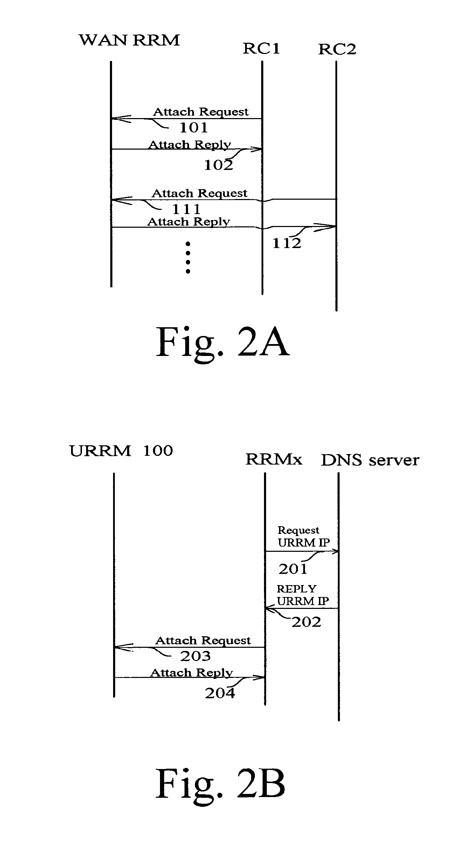

With respect to figure 2A, there is now detailed the particular cooperation between one WAN RRM dedicated to one radio technology - such as RRM 10 for instance dedicated to WIFI - and the different Attachment Points belonging to that radio technology.

The WAN RRM 10 is assumed to be switched on before the Attachment points and their associated Resource Controllers.

When each Resource Controller RC1 and RC2 - such as Resource controller 11-2 or 12-2 (for instance) - is switched on, the latter proceeds, after the execution of the POST (power on self test) routine , with the generation of a so-called ATTACH REQUEST message which is forwarded to WAN RRM device 10 in broadcast or, when the IP address of the latter is known, to unicast.

ATTACH REQUEST message includes particular information dedicated to the Attachment Point associated to the particular Resource Controller being considered such as the MAC address and, for instance in the case of WIFI, the channel frequency, and the Identification of the network (SSID - Service Set IDentifier). In addition, in the particular case where WAN RRM 10 is embodied as an application program running into a general purpose computer, the ATTACH REQUEST message also comprises the port number used by such application program.

Figure 2A particularly illustrates such ATTACH REQUEST messages 101 and 111 which are respectively generated by Resource Controller 11-2 and 12-2.

By receiving the ATTACH REQUEST messages from the different Attachment Points 11-1 and 12-1, WAN RRM 10 is made aware of the of the precise topology of the network, including the different Attachment Points and their associated resource controllers.

Upon receipt of an ATTACH REQUEST message - e.g. message 101 by RC 11-2 or message 111 generated by RC 12-2 - WAN RRM 10 generates a ATTACH REPLY message, represented by arrow 102 (resp. 112) in Figure 2A, which is returned back to RC1 (resp. RC2 ).

The ATTACH REPLY message particularly comprises confirmation or not of the acceptation of the service provided by WAN RRM, what is advantageous in the case of different service providers which can be all handled by one single WAN RRM device 10. In addition to such confirmation, ATTACH REPLY message may comprises additional configuration setting parameters for the resource controller 11-2 or 12-2.

If a Resource Controller does receive an ATTACH REPLY message from the WLAN RRM after a pre-configured period of time, it has to trigger again a new ATTACH REQUEST message toward the WLAN RRM device.

Further to the exchanges of messages 101 and 102 for Resource Controller 1 (resp. 111 and 112 for RC2), the set of measurements which are to be performed by the respective Resource Controller is continuously computed, so as to be reported, upon request, to the Wireless Access Network WAN RRM 10. In the particular case of WIFI, the Resource Controller 1 and 2 are WIMETER devices providing a continuous computation of the available bandwidth.

With respect to figure 2B, there is now described the process which is performed for achieving attachment of one particular WAN RRMx (x =1 to 3...) to the Unified Radio Resource Manager URRM 100.

It is to be noticed that the configuration of the network composing the URRM 100 and the different WAN RRMx (10, 20, 30 etc...) is a prerequisite, and arranged by the Internet Service Provider, or the Wireless Connectivity Service Provider.

Basically, the different components may be arranged with predetermined IP addresses so that they can communication to each other via the backbone.

Alternatively, each component may automatically receive their IP address for communicating each other via a particular server, such as a DHCP server for instance. Furthermore, the Service Provider may arrange the access to the IP address of the URRM via the use of a Domain Name Server.

In that particular situation, which is only described here by way of example, each WAN RRMx , when it is powered on, sends a particular requests (REQUEST

URRM IP) to the domain name server while specifying the name of the URRM . This is illustrated by message 201 in Figure 2B.

In response to the request 201, the Domain Name Server forwards to the RRMx (10, 20 or 30...) a REPLY URRM IP message containing the particular IP address of the Unified Radio Resource Manager 100.

Then, the RRMx generates an ATTACH_REQUEST message to the URRM 100 - represented by arrow 203 in figure 2B - so as to request attachment to the latter. By receiving the ATTACH REQUEST messages from the different WAN RRMx (10, 20, 30) the URRM 100 is made aware of the of the precise topology of the network and the different radio technologies which are available to the user.

Upon receipt of an ATTACH REQUEST message - e.g. message 203 by RRMx - URRM 100 generates an ATTACH REPLY message, represented by arrow 204 which is forwarded back to the RRMx.

ATTACH REPLY message particularly comprises confirmation or not of the acceptation of the service provided by URRM. In addition to such confirmation, ATTACH REPLY message may comprises additional configuration setting parameters for the different RRMx .

If a RRMx does receive an ATTACH REPLY message from the URRM 100 after a pre-configured period of time, it has to trigger again a new ATTACH REQUEST message toward the latter.

It should be noticed that the attachment procedure of the RRMx to the URRM, and more generally the communication between those components, may be subject of sophisticated security procedures and protocols, such as, for instance, based on the use of asymmetric keys, passwords etc...

However, for the sake of clarity, such techniques - well known to the skilled man- will not be further elaborated on.

It will now be described the particular procedure which is executed by MTC 2 of mobile terminal 1 when the latter enters within the wireless environment of the network shown in figure 1.

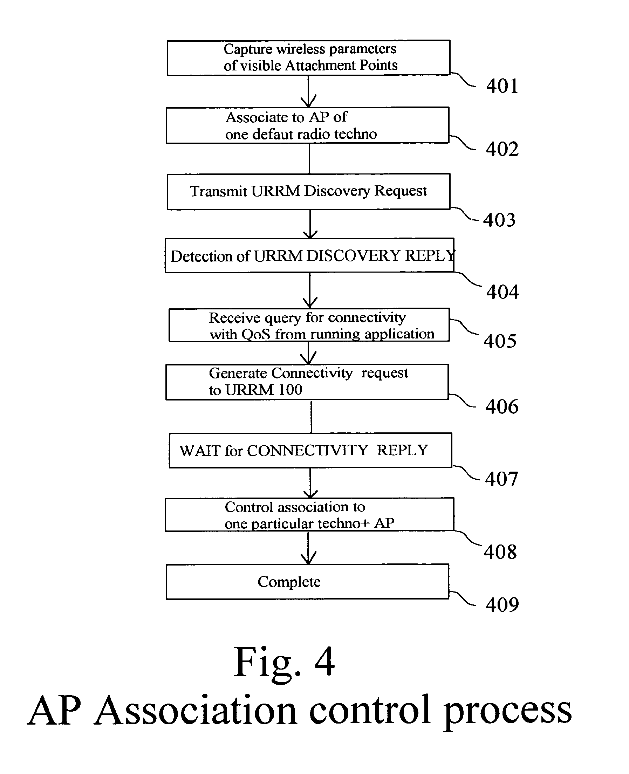

In a first step 401 , illustrated in Figure 4, the MTC captures via the different wireless interfaces the particular parameters of the wireless networks in accordance with any known method. Such parameters include the identifiers of the Attachments Points of the different wireless LAN ( WIFI, Wimax, UMTS) and, in the particular case of WIFI wireless network , the MAC address of the visible Access point (ie. Access points 11-1 and 12-1 of Figure 1), the strength of the signal and the SSID of the latter, when applicable.

The process then proceeds in a step 402 to the association of the mobile computer 1 to one particular attachment point belonging to one particular radio technology. In one particular embodiment, when WIFI Access Points is shown to be visible to mobile terminal 1, the attachment is achieved on the particular access point offering the higher signal level in accordance with known procedure of the 802.11 IEEE Standard. In that case, it is assumed to be associated with access point 11-1 shown in figure 1.

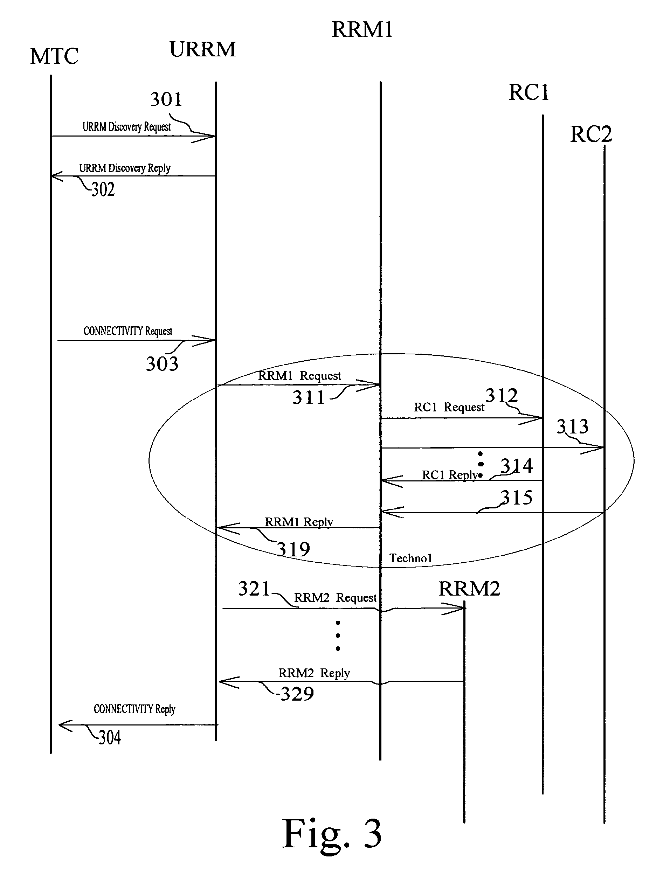

In a next step, the process then launches a process of discovery in a step 403 by means of the generation of a URRM DISCOVERY REQUEST message 301, as illustrated in Figure 3. In one particular embodiment RRM DISCOVERY MESSAGE is a broadcast message arranged to go beyond the first access point and attempt to reach the URRM device 100.

In a step 404, the process then waits for the detection of a URRM DISCOVERY REPLY generated by URRM device 100, as illustrated by arrow 302 in Figure 3.

In one particular embodiment, if no reply reaches mobile terminal 1, then MTC circuit 2 may optionally regenerate a further RRM DISCOVERY REQUEST at a later stage in order to retry the discovery procedure.

Assuming now that a user application is launched within terminal 1 which requesting some wireless communication resources. Such application can be any kind of video, audio or multimedia application or even classical application (mail, web, ftp, etc.) requiring some bandwidth, but also a determined Quality of Service (QoS), defined in terms of throughput, delay, security services etc...

In a step 405, MTC block 2 receives such query for connectivity resources associated with a determined QoS, and then generates, in a step 406, a CONNECTIVITY REQUEST which is forwarded to URRM 100 .

It should be noticed that the MTC can be designed to monitor the traffic generated by the applications running in the mobile terminal, and in response to said monitoring initiates the launching of the generation of one particular CONNECTIVITY REQUEST with the appropriate bandwidth requirement. The skilled man will make such designs in different ways which will not be developed hereinafter.

This CONNECTIVITY REQUEST message, represented by arrow 303 in Figure 3, may contain different types of information:
- information relative to the application requiring wireless communication resources, such as the size of packets, the transfer mode (unicast, broadcast or multicast) etc...
- information relative to the different Attachment Points which are visible to the terminal 1, including the identifiers and particular, for WIFI Access Points, the MAC address of such access point, the MAC address of the radio interface of the mobile device from which this access points is visible, the strength of the received signal. and the frequency channel used by this access point.

In addition, the CONNECTIVITY REQUEST message may contain information relative to the mobile terminal requesting the bandwidth allocation such us the link-layer data rate of the wireless communication card and the value of the basic rate (used to send the physical header).

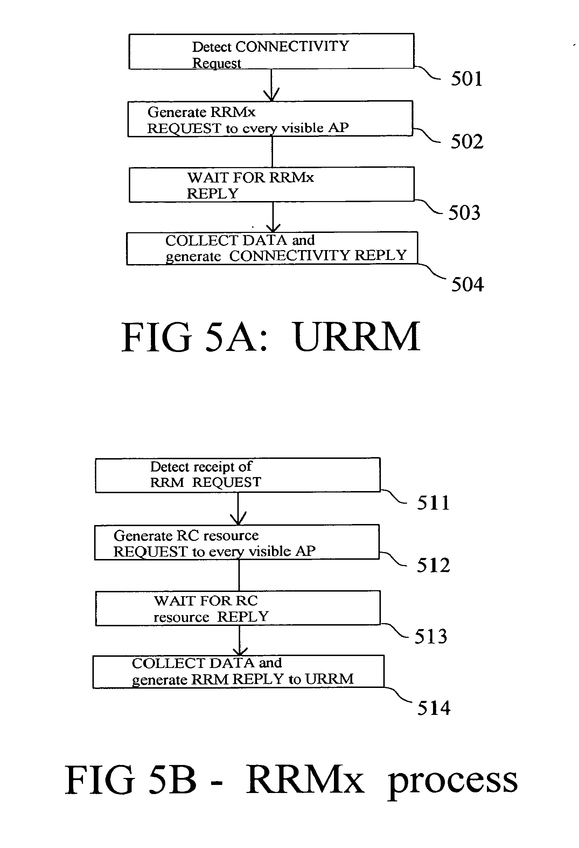

With respect to figure 5A, there is now described the process which is executed by the URRM device 100 when it receives the CONNECTIVITY REQUEST of arrow 303 from the Mobile Terminal 1.

In a step 501 , the URRM 100 detects the receipt of such CONNECTIVITY REQUEST and then generates, in a step 502, a RRMx REQUEST (x = 1, 2, 3...) to every WAN RRMx corresponding to one visible Attachment Point.

As previously, the RRMx REQUEST may contain two types of information:
- information relative to the application requiring wireless communication resources, such as the size of packets, the transfer mode (unicast, broadcast or multicast) etc...
- information relative to the different Attachment Points which are visible to the mobile terminal 1, including the MAC address of such access point, the MAC address of the radio interface of the mobile device from which this access points is visible, the strength of the received signal. and the frequency channel used by this access point.

In addition, the RRMx REQUEST message may contain information relative to the mobile terminal requesting the bandwidth allocation such us the link-layer data rate of the wireless communication card and the value of the basic rate (used to send the physical header).

In a step 503, the URRM block waits for a RRMx REPLY coming from the different WAN RRMx and collects the various elements of information which are integrated in a RRMx REPLY message which is generated in a step 504.

Figure 3 shows that URRM device 100 generates, in step 502, one RRM1 request referred to as arrow 311 which is forwarded to RRM1 10 assigned to the WIFI technology and, similarly, generates a RRM2 Request referred to as arrow 321 which is forwarded to RRM2 20 dedicated to the Wimax Technology.

The responses are respectively RRM1 REPLY shown by arrow 319 and 329 respectively.

With respect to figure 5B, there is now described the particular process which is executed by one WAN RRMx device (10, 20 or 30) for the purpose of collecting useful measurements parameters dedicated to the corresponding radio technology.

In a step 511 , the RRMx 10, 20 or 30 detects the receipt of a RRM REQUEST from URRM device 100 and then generates, in a step 512, a RC REQUEST which is forwarded to every Resource Controler associated with one visible Attachment Points belonging to the particular radio technology.

As previously, the RC REQUEST may contain two types of information:
- information relative to the application requiring wireless communication resources, such as the size of packets, the transfer mode (unicast, broadcast or multicast) etc...
- information relative to the different Attachment Points which are visible to the mobile terminal 1, including the MAC address of such access point, the MAC address of the radio interface of the mobile device from which this access points is visible, the strength of the received signal. and the frequency channel used by this access point.

In addition, the RC REQUEST message may contain information relative to the mobile terminal requesting resources allocation such us the link-layer data rate of the wireless communication card and the value of the basic rate (used to send the physical header).

In a step 513, the RRM 10, 20 or 30 waits for a RC REPLY coming from the different Resource Controllers and collects the various elements of information before forwarding them, in a step 514, in a RRM REPLAY .

Figure 3 shows that RRM1 device 10 generates, in step 512, one RC1 request (arrow 312) which is forwarded to RC1 11-2 assigned to the WIFI technology and, similarly, generates a RC2 Request (arrow 313) which is forwarded to RC 2 12-2.

The responses received from the two resource Controllers are respectively shown under the references 314 and 315, respectively.

It can be seen that each RRMx 10, 20 or 30 can aggregate, from the valuable information and measurements reported by the associated Resource Controllers, information regarding to the quality of Service, and also to the available bandwidth, before reporting such information to the URRM device 100.

Correspondingly, the URRM device 100 can aggregate the different information reported by the different RRMx corresponding to AP visible to the Mobile Terminal 1, into a CONNECTIVITY REPLY MESSAGE , which is detected in step 407 of figure 4, and shown in reference to arrow 304 in figure 3.

### Different embodiments may be considered.

In a first embodiment, the CONNECTIVITY REPLY message transmitted by the URRM device 100 includes control information for the mobile terminal which allows direct selection of the radio connectivity - ie the particular interface corresponding to that radio connectivity - with one particular attachment point. M

In a second embodiment, the CONNECTIVITY REPLY message transmitted by the URRM device 100 includes control information relating to the sole selection of the radio interface, and the mobile terminal 1 is free to select the appropriate visible Attachment Point in accordance with its own requirement.

In a third embodiment, the CONNECTIVITY REPLY message transmitted by the URRM device 100 only includes information relative to the measurements collected by the different RRMx, and leaves the mobile terminal to select the appropriate radio interface, and the appropriate Attachment point in accordance with its own QoS standard and requirements.

Whatever the particular embodiment which is considered, the Mobile Terminal uses the information which is included in the CONNECTIVITY REPLAY for selecting and controlling the particular technology and the particular attachment points, in a step 408 of Figure 408.

Then, in a step 409, the Attachment Point association process completes and the application software running into mobile terminal 1 may take profit of the communication resources provided by the selected AP belonging to the particular radio technology being selected.

The procedures which were described above provide effective coordination of Wireless resources so as to allow an effective connectivity complying with particular Quality of Service requirements.

Wide possibilities of measurements are made possible by Resources Controllers 11-2 and 12-2 and the reader is invited to refer to the non published European patent application 08368005.8 (Publication number EP2093940 , published on August 26, 2008 after the filing date of this application) and filed by the same applicant, the contents of which being herein incorporated by simple reference, for the purpose of providing one particular measurement based on the computation of the available band width...

In such a particular context, and within the frame of the above mentioned European patent application, Resource Controllers 11-2 and 12-2 are designated as Wimeters providing measurement and estimation of the available bandwidth for the associated Access Point.

The invention can be implemented in digital electronic circuitry, or in computer hardware, firmware, software, or in combinations of them. Apparatus of the invention can be implemented in a computer program product tangibly embodied in a machine-readable storage device for execution by a programmable processor; and method steps of the invention can be performed by a programmable processor executing a program of instructions to perform functions of the invention by operating on input data and generating output. The invention can be implemented advantageously in one or more computer programs that are executable on a programmable system including at least one programmable processor coupled to receive data and instructions from, and to transmit data and instructions to, a data storage system, at least one input device, and at least one output device. Each computer program can be implemented in a high-level procedural or object-oriented programming language, or in assembly or machine language if desired; and in any case, the language may be a compiled or interpreted language. Suitable processors include, by way of example, both general and special purpose microprocessors. Generally, a processor will receive instructions and data from a read-only memory and/or a random access memory. Generally, a computer will include one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM disks. Any of the foregoing can be supplemented by, or incorporated in, ASICs (application-specific integrated circuits).

## Claims

1. Process for controlling the association of one terminal (1) having at least two radio interfaces to one particular Attachment point (11-1, 12-1, 21-1, 22-1, 31-1, 32-1) belonging to a set of N wireless networks belonging each to a given radio technology, each comprising a set of Attachment Points (11-1, 12-1, 21-1, 22-1, 31-1, 32-1), each AP being associated to one particular Resource Controller device (11-2, 12-2, 21-2, 22-2, 31-2, 32-2) providing wireless communication measurements;
- arranging at least one Radio Resource Management RRMx device (10, 20, 30) dedicated to one given radio technology, each of said RRMx device being reported the measurements performed by said Resource Controller and further reporting aggregate information to a Unified Radio Resource Manager (URRM) being independent on one particular radio technology;
Said process involving the steps of:
- capturing (401) the wireless parameters of visible Attachment points belonging to at least two radio technologies;
- associating (402) with one default AP in order to establish a preliminary wireless connectivity;
- transmitting (403) a Discovery request (URRM DISCOVERY REQUEST) to said Unified Radio Resource Management device (100) for requesting benefit of a wireless connectivity with a given level Quality of Service;
- detecting (404) a URRM discovery reply (RRM DISCOVERY REPLY) from said URRM device (100) confirming access to said service;
- in response to a query presented by a running application within said new terminal (1), generating and transmitting (405, 406) to said Unified Radio Resources Management (URRM) device (100) a connectivity request message (CONNECTIVITY REQUEST) requesting connectivity with a given level of Quality of Service;
- waiting (407) for a Connectivity reply (CONNECTIVITY REPLY) comprising information reported by said Resource controllers to said RRMx , and then from said RRMx to said URRM;
- controlling (408) association to one particular Attachment Points in accordance with information included in said CONNECTIVITY REPLY received from said URRM device (100).

2. Process according to claim 1 **characterized in that** one Radio Resource Manager device is dedicated to a WIFI wireless LAN.

3. Process according to claim 1 **characterized in that** one Radio Resource Manger device is dedicated to a Wimax or UMTS wireless network.

4. Process according to claim 1 **characterized in that** Radio Resource Management devices and said Mobile Terminal communicate with said URRM after having received the IP address via a Domain Name Server.

5. Process for controlling the association of one terminal (1) to one particular Attachment point (11-1, 12-1, 21-1, 21-2, 31-1, 31-2) belonging to a set of N wireless networks belonging each to a given radio technology, each comprising a set of Attachment Points; said process comprising the steps of:
- arranging at least two dedicated Resource Controller devices (11-2, 12-2, 21-2, 22-2, 31-2, 32-2), each associated with one particular Attachment Points, said devices continuously providing some measurements associated to the computing of an estimation of the measurements, including the bandwidth, for the dedicated Attachment Points;
- arranging a centralized Radio Resources Management (RRM) device (10, 20, 30) dedicated to one radio technology for the purpose of collecting the results of said computation;
- arranging a Unified Radio Resources Management (URRM) device (100) for the purpose of collecting information gathered by said RRM devices ;
- setting a Mobile Terminal Controller module (MTC) in each mobile terminal to be connected to the wireless network, said module being designed for discovering the RRM device and for exchanging messages with it in order to select the optimal access point.
- running a process of Access Point association control for every new terminal (1) requesting access to the wireless network,
said Attachment Point Control process comprising the steps of:
- capturing (401) the parameters of the visible AP belonging to at least one radio technology;
- associating (402) said new terminal (201) to one particular AP belonging to one particular radio technology;
- generating and transmitting (403) a URRM discovery request (URRM DISCOVERY REQUEST) for requesting benefit of service provided by said Unified Radio Resources Management (RRM) device (100);
- detection (404) of a RRM discovery reply (URRM DISCOVERY REPLY) from said RRM device (100) confirming access to said service;
- in response to a query presented by a running application within said new terminal (1), generating and transmitting (405, 406) to said Unified Radio Resources Management (URRM) device (100) a CONNECTIVITY request message (CONNECTIVITY REQUEST) requesting connectivity with a given Quality of Service, such as a bandwidth resources;
- waiting (407) for a bandwidth reply (CONNECTIVITY REPLY) comprising information collected from said Resource controller devices (11-2, 12-2, 21-2, 22-2,31-2, 32-2) associated to visible Attachment Points (11-1, 12-1, 21-1, 21-2, 31-1, 31-2), said reply being prepared and forwarded by said Radio Resources Management device (10, 20, 30) to said Unified Radio Resource Management device (100);
- controlling (408) association to one particular access point based on said information forwarded by said Connectivity reply message received from said URRM device (100).

6. Process according to claim 1 **characterized in that** said quality of service includes the definition of a bandwidth required by said running application.

7. Process according to claim 5 **characterized in that** it comprises the step of receiving within said terminal (1) the collection of the results of the computation performed by said Resource Controller devices (11-2, 12-2, 21-2, 22-2, 31-2, 32-2), and using such collected data for controlling the association to one particular Attachment Point.

8. Process according to claim 5 **characterized in that** it said Unified Radio Resources Management (RRM) device (100) uses the collected data computed by said Resource Controller devices (11-2, 12-2, 21-2, 22-2, 31-2, 32-2) and selects one particular Attachment Point which is identified into said bandwidth reply forwarded to the new terminal requesting access to the wireless network.

9. Process according to anyone of the preceding claim **characterized in that** one among said Resource Controller devices (11-2, 12-2, 21-2, 22-2, 31-2, 32-2) is embedded as hardware circuitry with software executable code within said associated access point.

10. Process according to anyone of the preceding claim **characterized in that** one among said Resource Controller devices (11-2, 12-2, 21-2, 22-2, 31-2, 32-2) is a dedicated device distinct from the associated access point.

11. Process according to claim 1 **characterized in that** it said RRM device (10) is adapted to a WIFI wireless Lan comprising Access Points, said RRM device (10) generating a RC Request message consisting in a bandwidth request message (BANDWIDTH REQUEST) with information determining the size of the packets and the transfer mode, and that each of said Resource Controllers is a Wireless Measurement (Wimeter) devices using said information for computing an estimation of the bandwidth being available for the associated access point.

12. Resource Controller device to be associated to one Attachment Point of a wireless network comprising at least two different radio technologies; said device being able to communicate with a centralized Radio Resources Management (RRMx) device (10, 20, 30) for the purpose of collecting the results of said computation;
said device being **characterized in that** it comprises :
- means for receiving from said centralized Radio Resources Management (RRM) device (10, 20, 30) a message requesting a predetermined Quality of Service comprising data representative of the communication of a new terminal requesting access to the wireless network,
- means for generating an estimated value of the available bandwidth for the attached Attachment Point to said centralized Radio Resources Management (RRMx) device (10, 20, 30) for the purpose of collecting the results of said computation;

13. Mobile terminal for a wireless network comprising at least two different Attachment points belonging to two different radio technologies; said terminal comprising:
- means for capturing (401) the parameters of the visible Attachment Points;
- means for associating (402) said new terminal (1) to one default Attachment Point;
- means for generating and transmitting (403) a URRM discovery request (RRM DISCOVERY REQUEST) to a centralized Unified Radio Resources Management (RRM) device (100) communicating with RRM devices specific to different radio technologies, for requesting benefit of a service from said URRM device (100);
- means for detecting (404) of a URRM discovery reply (URRM DISCOVERY REPLY) from said URRM device (100) confirming access to said service;
- in response to a query presented by a running application within said new terminal (1), means for generating and transmitting (405, 406) to said Unified Radio Resources Management (RRM) device (100) a CONNECTIVITY request message (BANDWIDTH REQUEST) requesting connectivity with a given Quality of Service;
- means for waiting (407) for a CONNECTIVITY reply (CONNECTIVITY REPLY) comprising information collected by said Radio Resource Management devices (10, 20, 30) from Resource Controllers associated to respective Attachments points visible to said mobile computer, said reply being prepared and forwarded by said Unified Radio Resources Management device (100);
- means for controlling (408) association to one particular access point based on said information forwarded by said CONNECTIVITY reply message received from said URRM device (100).
